# EUROPÄISCHE PATENTSCHRIFT

(11) **EP 1 155 827 B1**
(45) Veröffentlichungstag und Bekanntmachung des Hinweises auf die Patenterteilung: **08.10.2003**
(21) Anmeldenummer: 01110015.3
(22) Anmeldetag: 26.04.2001
(51) Int. Cl.: B41F 13/008, B65H 5/00, F16H 25/16, B41F 21/05

(54) **Antrieb eines Anlegers für eine Bogen verarbeitende Maschine**
Drive of a feeder for a sheet-fed machine
Entraînement d'un appareil de marge pour une machine à feuilles

(30) Priorität: 16.05.2000 DE 10023682
(43) Veröffentlichungstag der Anmeldung: 21.11.2001
(73) Patentinhaber: MAN Roland Druckmaschinen AG, 63075 Offenbach (DE)
(72) Erfinder: Matthäus, Wolfgang, 63073 Offenbach (DE); Bäsel, Uwe, Dr.-Ing., 63069 Offenbach (DE); Schneider, Thomas, 64560 Riedstadt (DE)
(74) Vertreter: Stahl, Dietmar

(56) Entgegenhaltungen:
- EP-A- 0 182 593
- DD-A- 266 784
- DE-A- 1 910 733
- DE-A- 4 102 472
- DE-A- 19 835 005

## Beschreibung

Die Erfindung bezieht sich auf einen Antrieb eines Anlegers für eine Bogen verarbeitende Maschine nach dem Oberbegriff des Anspruchs 1.

Derartige Antriebe finden bei Anlegern z.B. zum Antrieb der Bänder eines Bändertischs mit sinusförmigem in Geschwindigkeitsverlauf Anwendung. Da die Antriebsrolle des Bändertischs sowie die Zahnräder des von der Eintourenwelle zur Antriebsrolle führenden Zahnradtriebs aufgrund ihrer Massenträgheit bei der Änderung von der beschleunigenden zur verzögernden Bewegung voreilen wollen, kommt es an den Zahnrädem zu einem Zahnflankenwechsel sowie Schwingungen im Zahnradtrieb, was zu einem erhöhten Verschleiß führt.

In der DE 198 35 005 A1 ist ein kurvengesteuertes Leistungsausgleichsgetriebe für ein Bogenbeschleunigungssystem beschrieben. Die Vorrichtung weist zum Momentenausgleich zwei unterschiedliche Kurven in Verbindung mit dem Antrieb eines Vorgreifersystemes auf.

In der DD 266 784 A1 ist ein Antrieb für ein kurvengesteuertes Bogenzuführsystem beschrieben. Die Vorrichtung weist ebenfalls zwei voneinander verschiedene Kurven zum Ausgleich von Antriebsmomenten im Antrieb eines Vorgreifersystemes auf.

In der DE-OS 19 10 733 ist ein Antrieb für einen Bogenanleger beschrieben. Er weist Getriebeeinrichtungen auf, die eine Verstellung zur Kompensation von Voreilungen oder Verzögerungen von Bogen gestattet. Ein Momentenausgleich findet nicht statt.

Aufgabe der Erfindung ist es daher einen Antrieb der eingangs genannten Art zu schaffen, bei dem derartige Belastungen der Bauteile des Antriebs wesentlich verringert werden.

Diese Aufgabe wird erfindungsgemäß mit den kennzeichnenden Merkmalen des Anspruchs 1 gelöst.

Durch diese Ausbildung werden die wechselnden Momente beim Stand der Technik in schwellende Momente umgewandelt, die zu einer erheblich geringeren Belastung der Bauteile des Antriebs, insbesondere der Zahnräder, und einer wesentlichen Reduzierung von Schwingungen im Zahnradtrieb und somit auch in der vom Zahnradtrieb angetriebenen Einrichtung des Anlegers führen.

Ein einfach mit wenigen Bauteilen ausgebildeter Antrieb wird dadurch erreicht, dass auf der ortsfesten Antriebswelle exzentrisch ein Antriebszahnrad angeordnet ist, durch das ein weiteres Zahnrad des Zahnradtriebs antreibbar ist, welches konzentrisch um eine zur Antriebswelle parallele Drehachse drehbar ist, wobei der Abstand zwischen Antriebswelle und Drehachse während einer Umdrehung der Antriebswelle zwischen einem Größtabstand und einem Kleinstabstand änderbar ist und wobei während des Anwachsens des Abstandes zum Größtabstand hin eine Federkraft ein anschwellendes Unterstützungsmoment und während des Reduzierens des Abstandes nach dem Größtabstand die Federkraft ein anschwellendes Gegenmoment auf die Antriebswelle ausübt.

Dazu kann in einfacher Weise auf der Antriebswelle ein radial wegragender Arm fest angeordnet sein, an dem in einem Abstand zur Achse der Antriebswelle eine Zugfeder mit ihrem einen Ende angreift, die mit ihrem anderen Ende ortsfest in einem radialen Abstand zur Antriebswelle befestigt ist, wobei die Zugfeder etwa in der Position des geringsten Abstands zwischen Antriebswelle und Drehachse des weiteren Zahnrads ihre größte Ausdehnung aufweist.

Um einen Massenausgleich an der Eintourenwelle zu erreichen, ist vorzugsweise der radial wegragende Arm eine koaxial auf der Antriebswelle angeordnete Scheibe.

Ein weiterer ebenfalls einfach mit wenigen Bauteilen aufgebauter Antrieb wird dadurch erreicht, daß auf der Antriebswelle eine Kurvenscheibe angeordnet ist, deren radial umlaufende Kontur etwa radial von einer Federkraft beaufschlagt ist, wobei der Abstand des Beaufschlagungspunkts der Federkraft auf der Kontur zur Achse der Antriebswelle während des Beginns des Reduzierens des Abstands zwischen Antriebswelle und Drehachse des weiteren Zahnrads vom Größtabstand her sich tangential der Antriebswelle annähert.

Ist dabei eine frei drehbar an einem Ende eines Schwenkhebels gelagerte Rolle an der radial umlaufenden Kontur der Kurvenscheibe in Anlage, wobei der um eine im Abstand zur Rolle um eine Schwenkachse schwenkbare Schwenkhebel von einer vorgespannten Feder mit der Rolle gegen die Kontur der Kurvenscheibe beaufschlagt ist, so sind günstige Kräfteverhältnisse erzielbar.

Dies ist insbesondere der Fall, wenn der Hebel ein zweiarmiger Hebel ist, an dessen einem Hebelarm die Rolle angeordnet ist und dessen anderer Arm von einer Feder beaufschlagt ist.

Die Feder kann dabei vorzugsweise eine Zugfeder sein, die mit ihrem einen Ende an dem Schwenkhebel und mit ihrem anderen Ende ortsfest angeordnet ist.

Die anzutreibende Einrichtung des Anlegers kann die Antriebsrolle eines Bändertisches oder ein Schleppsaugerantrieb sein.

Ausführungsbeispiele der Erfindung sind in der Zeichnung dargestellt und werden im folgenden näher beschrieben. Es zeigen
- Figur 1: ein erstes Ausführungsbeispiel eines Antriebs in der Seitenansicht
- Figur 2: den Antrieb nach Figur 1 in Querschnittsansicht
- Figur 3: ein zweites Ausführungsbeispiel eines Antriebs in der Seitenansicht
- Figur 4: den Antrieb nach Figur 3 in Querschnittsansicht.

Der in den Figuren dargestellte Antrieb eines Anlegers weist eine Antriebswelle 1 auf, die eine Eintourenwelle ist und mit gleichmäßiger Drehzahl über das fest auf der Antriebswelle 1 angeordnete Zahnrad 2 von einem nicht dargestellten Drehantrieb in entgegen dem Uhrzeigersinn gerichteter Drehrichtung 14 angetrieben wird.

Auf der Antriebswelle 1 ist exzentrisch ein Antriebszahnrad 3 angeordnet, durch das über ein weiteres Zahnrad 4 ein drittes Zahnrad 5 antreibbar ist.

Die Welle 6, auf der das dritte Zahnrad 5 drehfest angeordnet ist, führt zu einem ebenfalls nicht dargestellten Antrieb einer Antriebsrolle eines Bändertischs, die oszillierend mit sich erhöhender und verringernder Geschwindigkeit angetrieben wird.

Die sich erhöhende und verringernde Geschwindigkeit wird durch die exzentrische Anordnung des Antriebszahnrads 3 auf der mit gleichmäßiger Drehgeschwindigkeit angetriebenen Antriebswelle 1 erzeugt und über den Zahnradtrieb des weiteren Zahnrads 4 und des dritten Zahnrads 5 auf die Welle 6 übertragen.

Damit das weitere Zahnrad 4 trotz der exzentrischen Anordnung des Antriebszahnrads 3 immer in Eingriff in dem Antriebszahnrad 3 und dem dritten Zahnrad 5 verbleibt, ist die Drehachse 6 des dritten Zahnrads 5 an dem freien Ende von zwei Schwenkarmen 8 angeordnet, die mit ihrem anderen Ende frei schwenkbar auf der Welle 6 gelagert sind.

Damit ist der Achsabstand zwischen der Welle 6 und der Drehachse 7 sowie der Zahneingriff des weiteren Zahnrads 4 in das dritte Zahnrad immer gleich. Durch die Schwenkbarkeit des weiteren Zahnrads 4 kann dieses dem aufgrund der Exzentrizität unterschiedlichen Abstand zum Antriebszahnrad 3 immer folgen und mit diesem in Eingriff bleiben. Sichergestellt wird dieser Eingriff durch eine nicht dargestellt Feder, die die Schwenkarme 8 gegen das Antriebszahnrad 3 beaufschlagt.

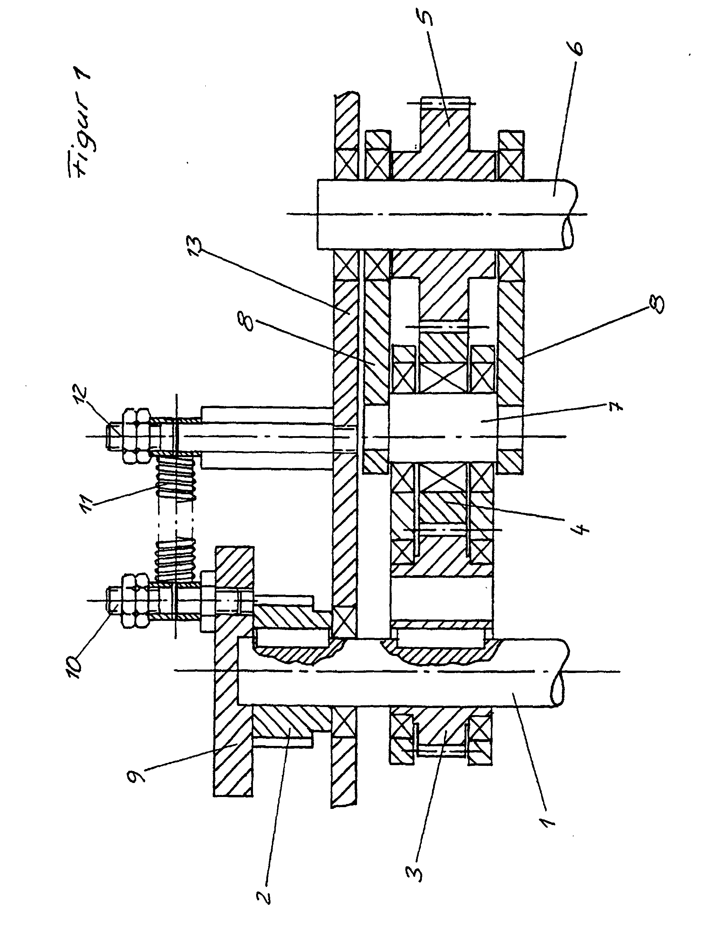

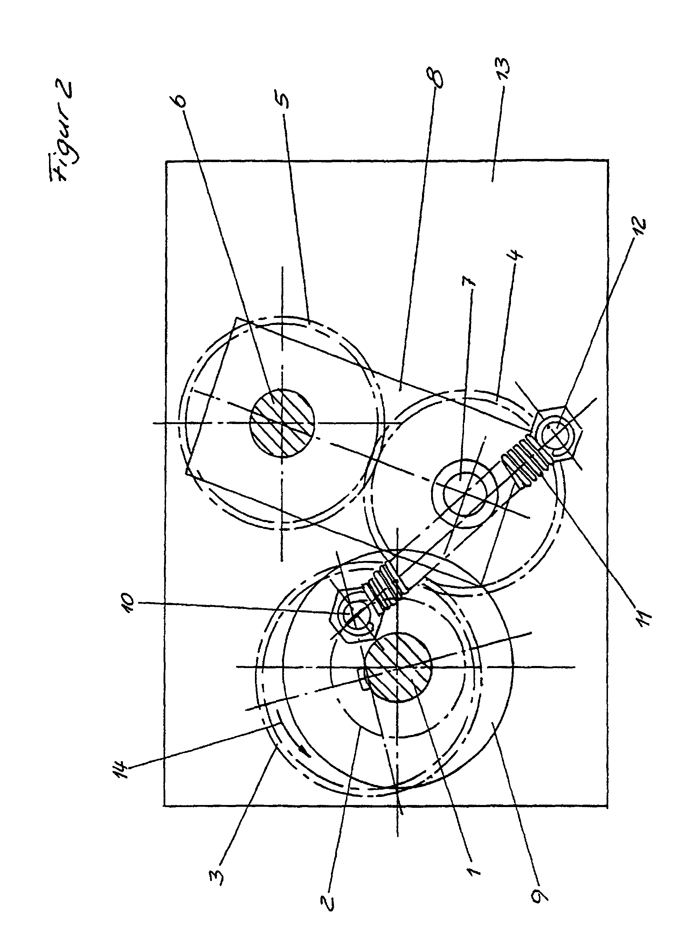

In den Figuren 1 und 2 ist auf der Antriebswelle 1 weiterhin eine Scheibe 9 drehfest angeordnet, die in einem radialen Abstand zur Antriebswelle 1 eine axial zur Antriebswelle 1 wegragende erste Halteschraube 10 trägt. Diese Halteschraube 10 ist in einem Bereich der Scheibe 9 angeordnet, in dem eine radiale Exzentrizität des Antriebszahnrads 3 zur Antriebswelle 1 nur gering bis überhaupt nicht vorhanden ist.

An der ersten Halteschraube 10 ist eine Zugfeder 11 mit ihrem einen Ende befestigt. Mit ihrem anderen Ende ist die Zugfeder 11 an einer zweiten Halteschraube 12 befestigt, die wiederum ortsfest an dem Gestell 13 des Anlegers angeordnet ist.

Die Anordnung der zweiten Halteschraube 11 an dem Gestell 13 des Anlegers ist derart, daß die Zugfeder 11 etwa in der Position des geringsten Abstandes zwischen Antriebswelle 1 und Drehachse 7 des weiteren Zahnrads 4 ihre größte Ausdehnung und etwa in der Position des größten Abstands zwischen Antriebswelle 1 und Drehachse 7 des weiteren Zahnrads 4 ihre geringste Ausdehnung aufweist.

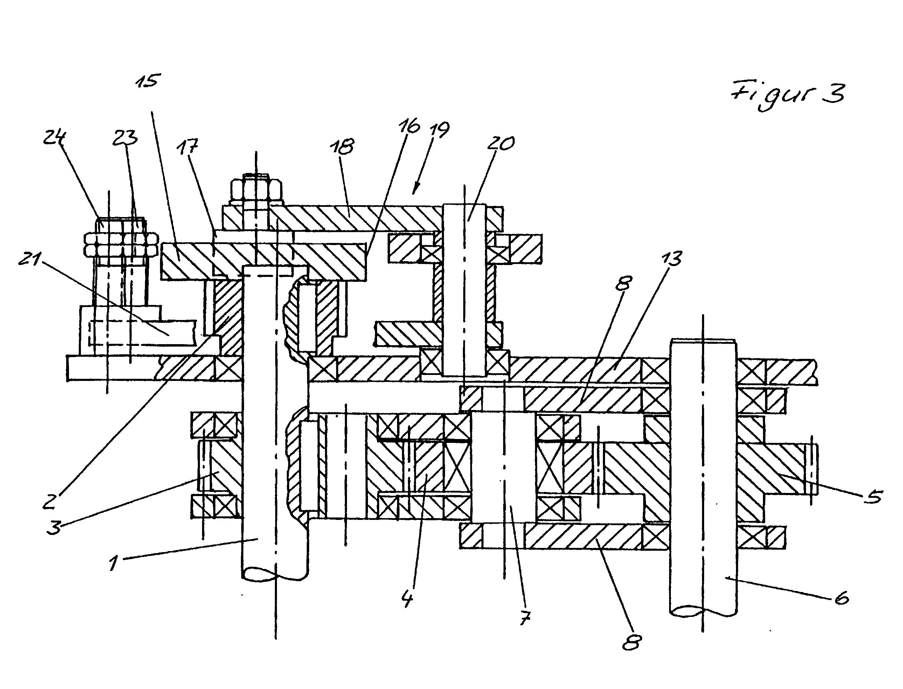

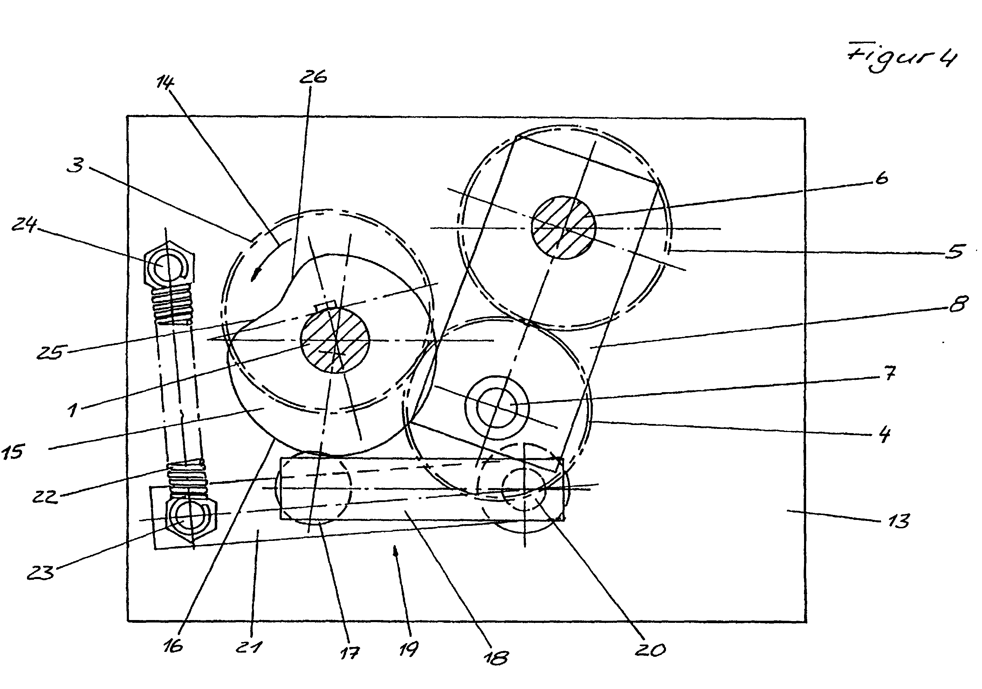

Bei dem Ausführungsbeispiel der Figuren 3 und 4 ist auf der Antriebswelle 1 eine Kurvenscheibe 15 drehfest angeordnet, deren radial umlaufende Kontur 16 etwa radial von einer Rolle 17 beaufschlagt ist. Die Rolle 17 ist frei drehbar an dem einen Ende eines ersten Hebelarms 18 eines zweiarmigen Hebels 19 angeordnet, der um eine zur Drehachse der Antriebswelle 1 parallele, gestellfeste Schwenkachse 20 schwenkbar ist. An dem zweiten Hebelarm 21 ist eine Zugfeder 22 mit ihrem einen Ende mittels einer Halteschraube 23 befestigt, deren anderes Ende über eine weitere Halteschraube 24 an dem Gestell 13 des Anlegers befestigt ist.

Durch die Zugfeder 22 wird die Rolle 17 über den zweiarmigen Hebel 19 immer in Anlage an der Kontur 16 der Kurvenscheibe 15 gehalten.

Die Kurvenscheibe 15 besitzt über etwa 290° mit nur geringer Exzentrizität annähernd gleichen radialen Abstand ihrer Kontur 16 zur Antriebswelle 1, so daß in diesem Bereich weitgehend kein Moment von dem Feder-Hebelsystem auf die Antriebswelle 1 ausgeübt wird.

Die verbleibenden etwa 70° der Kontur 16 verlaufen mit etwa tangential sich der Antriebswelle 1 nähernden Bereichen 25 und 26, die sich etwa ein "V" bildend in radialem Abstand zur Antriebswelle 1 treffen.
In Drehrichtung 14 der Antriebswelle 1 gesehen gelangt die Rolle 17 aus dem radial äußeren Bereich der Kontur 16 und aufgrund hoher Spannung der Zugfeder 22 hoher Anlagekraft in den Bereich 25, der sich der Antriebswelle 1 annähert, wobei sich die Spannung der Zugfeder 22 und damit die Anlagekraft der Rolle 17 an der Kontur 16 aber auch der wirksame Radius zwischen Drehachse der Kurvenscheibe 15 und Beaufschlagungspunkt der Rolle 17 reduziert.

Dabei erhält die Antriebswelle 1 über die Kurvenscheibe 15 ein in Drehrichtung 14 wirkendes Unterstützungsmoment, was gerade dann wirkt, wenn der Abstand zwischen Antriebswelle 1 und Drehachse 7 sich vom Größtabstand her beginnt zu reduzieren, so daß es durch das Voreilenwollen des weiteren Zahnrads 4 nicht zu einem Zahnflankenwechsel zwischen den Zähnen des Antriebszahnrads 3 und des weiteren Zahnrads 4 kommt.

Nach Überwinden des Tiefpunkts des "V" der Kontur 16 entfernt sich die Rolle 17 am Bereich 26 der Kontur 16 wieder von der Drehachse der Kurvenscheibe 15, wodurch die Zugfeder 22 gespannt wird und auf die Antriebswelle ein dem Antriebsmoment des Zahnrads entgegenwirkendes Gegenmoment einwirkt.

### Bezugszeichenliste

- 1: Antriebswelle
- 2: Zahnrad
- 3: Antriebszahnrad
- 4: weiteres Zahnrad
- 5: drittes Zahnrad
- 6: Welle
- 7: Drehachse
- 8: Schwenkarme
- 9: Scheibe
- 10: erste Halteschraube
- 11: Zugfeder
- 12: zweite Halteschraube
- 13: Gestell
- 14: Drehrichtung
- 15: Kurvenscheibe
- 16: Kontur
- 17: Rolle
- 18: erster Hebelarm
- 19: zweiarmiger Hebel
- 20: Schwenkachse
- 21: zweiter Hebelarm
- 22: Zugfeder
- 23: Halteschraube
- 24: Halteschraube
- 25: Bereich
- 26: Bereich

## Patentansprüche

1. Antrieb eines Anlegers für eine Bogen verarbeitende Maschine, insbesondere eine Druckmaschine, mit einer mit gleichmäßiger Drehzahl angetriebenen Antriebswelle (1), insbesondere einer Eintourenwelle, von der über einen Zahnradtrieb (3, 4, 5) eine Einrichtung des Anlegers während einer Umdrehung der Antriebswelle (1) mit sich beschleunigender und sich verzögemder Bewegung antrelbbar ist wobei von der Antriebswelle (1) zusätzlich ein Momentenausgleichsgetriebe (9, 11; 15, 22) antreibbar ist, durch das in der Beschleunigungsphase der Bewegung der Einrichtung ein anschwellendes Gegenmoment und in der Verzögerungsphase ein anschwellendes Unterstützungsmoment auf die Antriebswelle (1) wirkt,
**dadurch gekennzeichnet,**
**dass** auf der ortsfesten Antriebswelle (1) exzentrisch ein Antriebszahnrad (3) angeordnet ist, durch das ein weiteres Zahnrad (4) des Zahnradtriebs antreibbar ist, welches konzentrisch um eine zur Antriebswelle (1) parallele Drehachse (7) drehbar ist, wobei der Abstand zwischen Antriebswelle (1) und Drehachse (7) während einer Umdrehung der Antriebswelle (1) zwischen einem Größtabstand und einem Kleinstabstand änderbar ist und wobei während des Anwachsens des Abstandes zum Größtabstand hin eine Federkraft (11, 22) in anschwellendes Unterstützungsmoment und während des Reduzierens des Abstandes nach dem Größtabstand die Federkratt (11, 22) ein anschwellendes Gegenmoment auf die Antriebswelle (1) ausübt.

2. Antrieb nach Anspruch 1, **dadurch gekennzeichnet, daß** auf der Antriebswelle (1) ein radial wegragender Arm fest angeordnet ist, an dem in einem Abstand zur Achse der Antriebswelle (1) eine Zugfeder (11) mit ihrem einen Ende (10) angreift, die mit ihrem anderen Ende (12) ortsfest in einem radialen Abstand zur Antriebswelle (1) befestigt ist, wobei die Zugfeder (11) etwa in der Position des geringsten Abstands zwischen Antriebswelle (1) und Drehachse (7) des weiteren Zahnrads (4) ihre größte Ausdehnung aufweist.

3. Antrieb nach Anspruch 2, **dadurch gekennzeichnet, daß** der radial wegragende Arm eine koaxial auf der Antriebswelle (1) angeordnete Scheibe (9) ist.

4. Antrieb nach Anspruch 1, **dadurch gekennzeichnet daß** auf der Antriebswelle (1) eine Kurvenscheibe (15) angeordnet ist, deren radial umlaufende Kontur (16) etwa radial von einer Federkraft beaufschlagt ist, wobei der Abstand des Beaufschlagungspunkts der Federkraft auf der Kontur (16) zur Achse der Antriebswelle (1) während des Beginns des Reduzierens des Abstands zwischen Antriebswelle (1) und Drehachse (7) des weiteren Zahnrads (4) vom Größtabstand her sich tangential der Antriebswelle (1) annähert.

5. Antrieb nach Anspruch 4, **dadurch gekennzeichnet, daß** eine frei drehbar an einem Ende eines Schwenkhebels gelagerte Rolle (17) an der radial umlaufenden Kontur (16) der Kurvenscheibe (15) in Anlage ist, wobei der um eine im Abstand zur Rolle (17) um eine Schwenkachse (20) schwenkbare Schwenkhebel von einer vorgespannten Feder (22) mit der Rolle (17) gegen die Kontur (16) der Kurvenscheibe (15) beaufschlagt ist.

6. Antrieb nach Anspruch 5, **dadurch gekennzeichnet, daß** der Hebel ein zweiarmiger Hebel (19) ist, an dessen einem Hebelarm (18) die Rolle (17) angeordnet ist und dessen anderer Hebelarm (21) von einer Feder (22) beaufschlagt ist.

7. Antrieb nach Anspruch 6, **dadurch gekennzeichnet, daß** die Feder eine Zugfeder (22) ist, die mit ihrem einen Ende (23) an dem Schwenkhebel und mit ihrem anderen Ende (24) ortsfest angeordnet ist.

8. Antrieb nach einem der vorhergehenden Ansprüche, **dadurch gekennzeichnet, daß** die Einrichtung des Anlegers die Antriebsrolle eines Bändertischs ist.

9. Antrieb nach einem der Ansprüche 1 bis 7, **dadurch gekennzeichnet, daß** die Einrichtung des Anlegers ein Schleppsaugerantrieb ist.

## Claims

1. Drive for a feeder for a sheet-processing machine, in particular a printing press, having a drive shaft (1), in particular a single-revolution shaft, which is driven at a constant rotational speed and, via a gear-wheel drive (3, 4, 5), is capable of driving a device of the feeder with an accelerating and decelerating movement during a rotation of the drive shaft (1), the drive shaft (1) additionally being capable of driving a moment-equalization mechanism (9, 11; 15, 22) via which a rising countermoment acts on the drive shaft (1) in the acceleration phase of the movement of the device and a rising assisting moment acts on the drive shaft (1) in the deceleration phase, **characterized in that** a drive gear wheel (3) is eccentrically arranged on the fixed-position drive shaft (1), via which drive gear wheel it is possible to drive a further gear wheel (4) of the gear-wheel drive, which is rotatable concentrically about an axis of rotation (7) which is parallel to the drive shaft (1), it being possible to vary the distance between the drive shaft (1) and the axis of rotation (7) during a rotation of the drive shaft (1) between a maximum distance and a minimum distance, and, while the distance is increasing towards the maximum distance, a spring force (11, 22) exerting a rising assisting moment on the drive shaft (1) and, while the distance is decreasing following the maximum distance, the spring force (11, 22) exerting a rising countermoment on the drive shaft (1) .

2. Drive according to Claim 1, **characterized in that** a radially protruding arm is firmly arranged on the drive shaft (1), on which arm one end (10) of a tension spring (11) acts at a distance from the axis of the drive shaft (1) and the other end (12) of the said tension spring is fastened in a fixed position at a radial distance from the drive shaft (1), the tension spring (11) having its largest extension approximately at the position of the smallest distance between the drive shaft (1) and axis of rotation (7) of the further gear wheel (4) .

3. Drive according to Claim 2, **characterized in that** the radially protruding arm is a disc (9) arranged coaxially on the drive shaft (1).

4. Drive according to Claim 1, **characterized in that** a cam disc (15) is arranged on the drive shaft (1) and a spring force is applied approximately radially to the radially circulating contour (16) of the said cam disc, the distance between the point at which the spring force is applied on the contour (16) and the axis of the drive shaft (1) approaching the drive shaft (1) tangentially while the distance between the drive shaft (1) and the axis of rotation (7) of the further gear wheel (4) starts to decrease from the maximum distance.

5. Drive according to Claim 4, **characterized in that** a roller (17), mounted on one end of a pivoting lever so as to rotate freely, is in contact with the radially circulating contour (16) of the cam disc (15), the pivoting lever, which can be pivoted at a distance from the roller (17) about a pivoting axis (20), being pressed, together with the roller (17), against the contour (16) of the cam disc (15) by a prestressed spring (22).

6. Drive according to Claim 5, **characterized in that** the lever is a two-armed lever (19), on one lever arm (18) of which the roller (17) is arranged and the other lever arm (21) of which is acted on by a spring (22).

7. Drive according to Claim 6, **characterized in that** the spring is a tension spring (22), one end (23) of which is arranged on the pivoting lever and the other end (24) of which is arranged in a fixed position.

8. Drive according to one of the preceding claims, **characterized in that** the device of the feeder is the drive roller of a feed table.

9. Drive according to one of Claims 1 to 7, **characterized in that** the device of the feeder is a dragging-sucker drive.

## Revendications

1. Entraînement d'un margeur pour une machine traitant des feuilles, notamment une imprimante, comprenant un arbre d'entraînement (1) entraîné à une vitesse uniforme, notamment un arbre à une seule vitesse, par lequel un dispositif du margeur peut être entraîné pendant une rotation de l'arbre d'entraînement (1) avec un mouvement s'accélérant et se ralentissant par le biais d'un mécanisme à roues dentées (3, 4, 5), l'arbre d'entraînement (1) pouvant en outre entraîner un engrenage compensateur de couple (9, 11; 15, 22), par lequel, dans la phase d'accélération du mouvement du dispositif, un couple conjugué croissant agit sur l'arbre d'entraînement (1), et dans la phase de ralentissement, un couple de support croissant agit sur l'arbre d'entraînement (1),
**caractérisé en ce que**
sur l'arbre d'entraînement (1) fixe, est disposée de manière excentrée, une roue dentée d'entraînement (3) par laquelle une autre roue dentée (4) du mécanisme à roues dentées peut être entraînée, laquelle peut tourner concentriquement autour d'un axe de rotation (7) parallèle à l'arbre d'entraînement (1), la distance entre l'arbre d'entraînement (1) et l'axe de rotation (7) pouvant varier pendant une rotation de l'arbre d'entraînement (1) entre une distance maximale et une distance minimale, et pendant l'augmentation de la distance jusqu'à la distance maximale, une force de ressort (11, 22) exerçant un couple de support croissant, et pendant la réduction de la distance après la distance maximale, la force de ressort (11, 22) exerçant un couple conjugué croissant sur l'arbre d'entraînement (1).

2. Entraînement selon la revendication 1, **caractérisé en ce qu'**un bras saillant radialement vers l'extérieur est disposé fixement sur l'arbre d'entraînement (1), un ressort de traction (11) venant en prise avec l'une de ses extrémités (10) sur ce bras à une certaine distance de l'axe de l'arbre d'entraînement (1) et étant fixé à son autre extrémité (12) fixement à une distance radialement de l'arbre d'entraînement (1), le ressort de traction (11) présentant, approximativement dans la position de la distance minimale entre l'arbre d'entraînement (1) et l'axe de rotation (7) de l'autre roue dentée (4), son extension maximale.

3. Entraînement selon la revendication 2, **caractérisé en ce que** le bras saillant radialement vers l'extérieur est un disque (9) disposé coaxialement sur l'arbre d'entraînement (1).

4. Entraînement selon la revendication 1, **caractérisé en ce qu'**une came (15) est disposée sur l'arbre d'entraînement (1), son contour périphérique radial (16) étant sollicité approximativement radialement par une force de ressort, la distance du point d'impact de la force de ressort sur le contour (16) à l'axe de l'arbre d'entraînement (1) pendant le commencement de la réduction de la distance entre l'arbre d'entraînement (1) et l'axe de rotation (7) de l'autre roue dentée (4) à partir de la distance maximale, s'approchant tangentiellement de l'arbre d'entraînement (1).

5. Entraînement selon la revendication 4, **caractérisé en ce qu'**un galet (17) monté libre en rotation à une extrémité d'un levier pivotant est en appui contre le contour périphérique radial (16) de la came (15), le levier pivotant pouvant pivoter autour d'un axe de pivotement (20) à distance du galet (17) étant sollicité par un ressort précontraint (22) avec le galet (17) contre le contour (16) de la came (15).

6. Entraînement selon la revendication 5, **caractérisé en ce que** le levier est un levier à deux bras (19) contre un bras de levier (18) duquel est disposé le galet (17) et dont l'autre bras de levier (21) est sollicité par un ressort (22).

7. Entraînement selon la revendication 6, **caractérisé en ce que** le ressort est un ressort de traction (22) qui est disposé avec l'une de ses extrémités (23) contre le levier pivotant, et avec son autre extrémité (24) fixe en position.

8. Entraînement selon l'une quelconque des revendications précédentes, **caractérisé en ce que** le dispositif du margeur est le galet d'entraînement d'une table à rubans.

9. Entraînement selon l'une quelconque des revendications 1 à 7, **caractérisé en ce que** le dispositif du margeur est un entraînement à ventouses de transport.
